(19) Europäisches Patentamt / European Patent Office / Office européen des brevets

(11) **EP 4 544 174 B1**

(12) **EUROPEAN PATENT SPECIFICATION**

(45) Date of publication and mention
of the grant of the patent:
**25.02.2026 Bulletin 2026/09**

(21) Application number: **23737886.4**

(22) Date of filing: **23.06.2023**

(51) International Patent Classification (IPC):
**F03D 1/06** (2006.01)          **F03D 80/50** (2016.01)

(52) Cooperative Patent Classification (CPC):
**F03D 1/0675; F03D 80/507;** F03D 13/104;
Y02E 10/72

(86) International application number:
**PCT/DK2023/050163**

(87) International publication number:
**WO 2023/247000 (28.12.2023 Gazette 2023/52)**

(54) **A METHOD OF REPOWERING A WIND TURBINE**

VERFAHREN ZUM REPOWERN EINER WINDTURBINE

PROCÉDÉ DE RÉ-ÉQUIPEMENT D'UNE ÉOLIENNE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **23.06.2022 DK PA202200608**

(43) Date of publication of application:
**30.04.2025 Bulletin 2025/18**

(73) Proprietor: **VESTAS WIND SYSTEMS A/S**
**8200 Aarhus N (DK)**

(72) Inventors:
• **NIELSEN, Thomas S. Bjertrup**
**8200 Aarhus N (DK)**
• **NIELSEN, Jens Bredal**
**8200 Aarhus N (DK)**

(74) Representative: **Vestas Patents Department**
**Hedeager 42**
**8200 Aarhus N (DK)**

(56) References cited:
**EP-A1- 3 580 453          WO-A1-2023/126041**
**US-A1- 2012 051 912**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

<u>Technical field</u>

The present invention relates generally to repowering of horizontal axis wind turbines and more particularly to a repowering where used blades are replaced by repower blades as well as methods of operating a repowered wind turbine.

<u>Background</u>

Wind turbines that are already installed and in operation are typically designed based on design loads determined based on the specific blade type, rotor diameter and climate where the wind turbine is intended to operate. The wind turbine owner could increase AEP, and as such the yearly earnings, if the rotor diameter can be increased. Further a larger rotor diameter may result in increased power production at lower wind speeds where the price per kWh in some markets are higher which increase earnings. However, it is often not possible to increase the rotor diameter, or the increase is very limited of as a larger rotor is heavier resulting in increased loads for the load carrying components in the hub, nacelle and/or tower.

EP 3 580 453 A1 and US 2012/051912 A1 discloses wind turbine generators.

<u>Summary</u>

It is an object of the invention to provide an improved method of repowering a wind turbine generator. It is a further object of the invention to provide an improved method of operating the repowered wind turbine.

According to the first aspect, the invention provides a method of repowering a horizontal-axis wind turbine comprising a tower, a nacelle located rotatably at the apex of the tower, and a rotor. The rotor is having a hub and at least three used blades mounted pitchably to the hub and extending radially therefrom. The method comprises the steps of uninstall the at least three used blades from the hub and install at least three repower blades to the hub. This typically involves releasing and reinstalling the blades from the hub uptower, but particularly for rotors of smaller diameters, such as diameters below about 100 m, the rotor may be lowered to the ground before the blades are released and reinstalled from the hub.

Each repower blade extending between a root and a tip and comprises a connection point located between the root and the tip. Further, the method comprises to install a plurality of blade connecting members where each blade connecting member being connected between corresponding connection points of a pair of repower blades and install a tensioning system with the hub, where the tensioning system is configured to adjust a tension in each blade connecting member.

The connection point and connecting members are arranged so the blades may pitch in response to change in incoming wind. The connection points may be on the blade surface, inside the blade surface or on an extension of the blade to outside the blade surface. The blade connecting members may be a one-piece member or an assembly of two or more members, such as two extended pieces (such as cables) connected to a central frame optionally together with a tension member connecting the tensioning system to the blade connecting member.

The tensioning system being installed with the hub may for example be that the tensioning system is connected as a separate system onto the hub to thereby forming a collective repower hub also referred to simply as hub, but the tensioning system may also be built at least partially into the used hub.

In one example, the used blades are conventional wind turbine blades of the horizontal-axis wind turbine supported only at the blade root during use. In other words, conventional wind turbine blades are fundamentally different from repower blades used in the current invention, which repower blades are supported both via the blade root and via the blade connecting members. Conventional wind turbine blades do not have a connection point and hence connecting members as described in the present invention cannot be installed between a pair of conventional blades.

In one example the tensioning system may comprise a plurality of linear actuators, such as one linear actuator per blade, each linear actuator being coupled between the hub and a blade connecting member. The coupling between the hub and the blade connecting member is typically via the tensioning system and may be via a tension member.

In one example, the repower blade is installed to hub via a coning adjustment member arranged between the blade root and the hub. The coning adjustment member typically has two circular connections to respectively the pitch bolt connection circle and the blade root. The two circular connections are arranged at a slight angle, such as between 0.5 to 6° to allow for change in coning and/or sweep angle of the hub to blade connection. Wind turbines with the pitchable blade connecting member supported blades supports flapwise load reduction and the load reduction may be increased with increasing coning angle of the blades. Furthermore, increasing coning reduces the risk of tower hits. Unfortunately, it was found that increasing the coning angle also increased the pitch load during pitching and hence, if a coning adjustment member is arranged between the blade root and the hub as part of the repowering method, then it is preferred that the pitch system such as the pitch actuator and/or the blade bearing is reinforced or replaced during the repowering method.

In one example, the tensioning system is an independent unit attached near the front of the (used) hub. The tensioning system comprises a separate system for powering the linear actuators, such as a separate hydraulic system or a separate electrical system. In this way, no rearrangement or reconnections in the hub will be required and wind turbine down time for the repowering may be reduced. Yet, some strengthening of parts of the hub may be required to allow for the attachment of the independent tensioning unit to the hub, but such strengthening may typically be prepared without breaking and reconnecting electrical and/or hydraulic connections in the (used) hub.

In another example, the tensioning system comprises a system for powering the linear actuators which is integrated with a blade pitch system of the hub by a shared system for powering the linear actuators. Such integration may for example be by sharing (part of) a hydraulic system or (part of) an electrical system used for pitching.

In one example, the method may comprise deinstall the hub from nacelle, install the tensioning system with the hub away from the nacelle and install the hub with tensioning system to the nacelle. This may be a preferred method if the tensioning system is to some degree integrated into the hub, such as for example, hydraulic containers are installed in the hub, or a common electrical system or hydraulic pump is used for the pitch and the tensioning system.

In one example, other components of the used wind turbine are serviced or replaced during repowering of the wind turbine. For example, a component of the wind turbine that is replaced may be selected from a group of main bearing, a gearbox, a generator, a blade bearing, a pitch system component, a yaw system component, a main shaft, and a base frame. In some cases, replacement or strengthening of components may allow for higher production or rating of the wind turbine. For example, the main bearing may require strengthening, gearbox may be adjusted for different rotational speed or torque, the generator may be upgraded to increase power production.

The repower blades may be at least 15% longer than the used blades and preferably the repower blades may be at least 20% longer than the used blade. In some case - particularly when one or more other components of the wind turbine is reinforced, such as the pitch system - the repower blades may be at least 25% longer than the used blades and preferably the repower blades may be at least 30% longer than the used blade. It is preferred that the repower blades are at most 35% longer than the used blades and preferably the repower blades are at most 25% longer than the used blade.

In another aspect of the invention concerns a method of operating a wind turbine repowered according to another aspect of the invention. In one example, the maximum tip speed during operation of the wind turbine generator with used blades is the same as the maximum tip speed during operation of the wind turbine generator with the repower blades. The maximum rotational speed may be adjusted as follows:

$$\omega_{Max\ Repowered} = \omega_{Max\ Used} \frac{Rotor\ diameter_{Used}}{Rotor\ diameter_{Repowered}}$$

**Where** $\omega_{Max\ Repowered}$ is the maximum rotational speed and Rotor diameter is the diameter of the rotor, i.e. (2x R + hub diameter). This allows for reuse of the same generator and (optional) gearbox where the longer blade length allows for earlier reaching of the maximum power. This is particularly relevant where the used wind turbine is a medium wind or a high wind turbine positioned at a low or medium wind site. The earlier reaching of maximum power may here allow for more energy production particularly at lower wind speeds where the value of the energy may be higher.

In another example, the maximum hub angular rotation speed during operation of the wind turbine generator with used blades is the same as the maximum hub angular rotation speed during operation of the wind turbine generator with the repower blades. This case typically requires replacement/upgrading of generator (and optional gearbox) as higher maximum power is reached. Often the higher tip speed will lead to increased noise level and potentially higher wear on blades. However, a higher amount of energy may be produced. To ensure wear of the components of the repowered wind turbine is limited to an acceptable level, it is preferred that one or more components of the drive train are replaced during the repowering using this option. Typically, components of the drive train replace are one or more of gear, generator and/or converter.

In one example, the repowering method comprising the step of installing an updated control software adapted to control the linear actuators and thereby the tension in the blade connecting members. The adjustment of the tension may be substantially statically, e.g. infrequent or even once for an extended period of operation, or the adjustment may be frequent, or even dynamically with adjustment during every rotation or at least several times per hour of operation.

A further aspect concerns the use of a repower blade for repowering a horizontal-axis wind turbine comprising a tower, a nacelle located rotatably at the apex of the tower, and a rotor having a central hub adapted for receiving at least three used blades mounted pitchably to the hub. The repower blade extends between a root and a tip, and comprises a connection point, where the connection point being located between the root and the tip. The connection point is for connecting blade connecting members to the blade. In some examples, the connection point is preferably between 25% and 60% of the total blade length away from the blade root. In preferred examples, the connection point may be between 40% and 50% of the total blade length away from the blade root.

Brief description of the drawings

Examples of the present invention will now be described by way of non-limiting example only, with reference to the accompanying figures, in which:

Figure 1 is a schematic perspective view of a horizontal axis wind turbine comprising used blades;
Figure 2 is a schematic perspective view of a horizontal axis wind turbine comprising repower blades, blade connecting members and tensioning system; and
Figure 3 schematically shows a used blade and a repower blade.

Detailed description

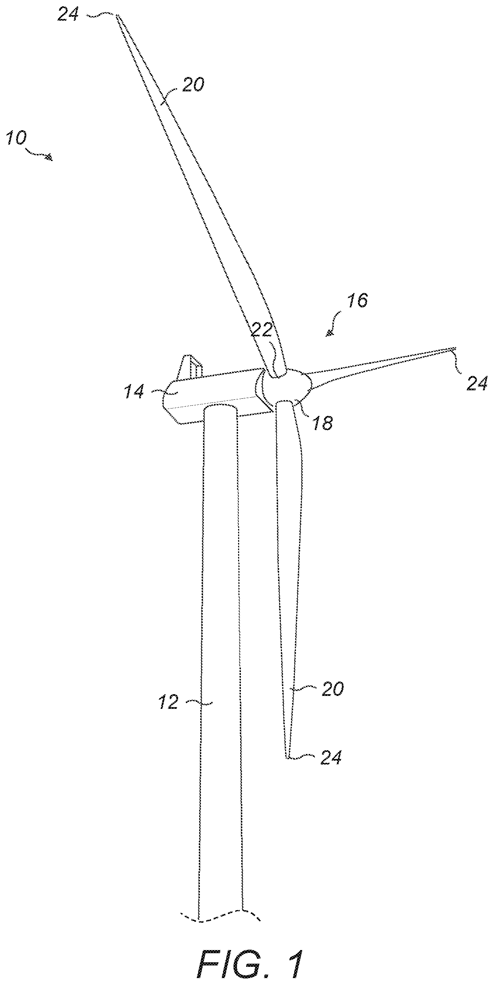

Figure 1 shows a horizontal-axis wind turbine 10 comprising a tower 12 and a nacelle 14 mounted rotatably on the tower 12. A rotor 16 with a hub 18 and used blades 20 connected pitchable to the hub 18. Each blade has a root 22 connected to the hub 18 and a tip 24 extending away from the hub 18.

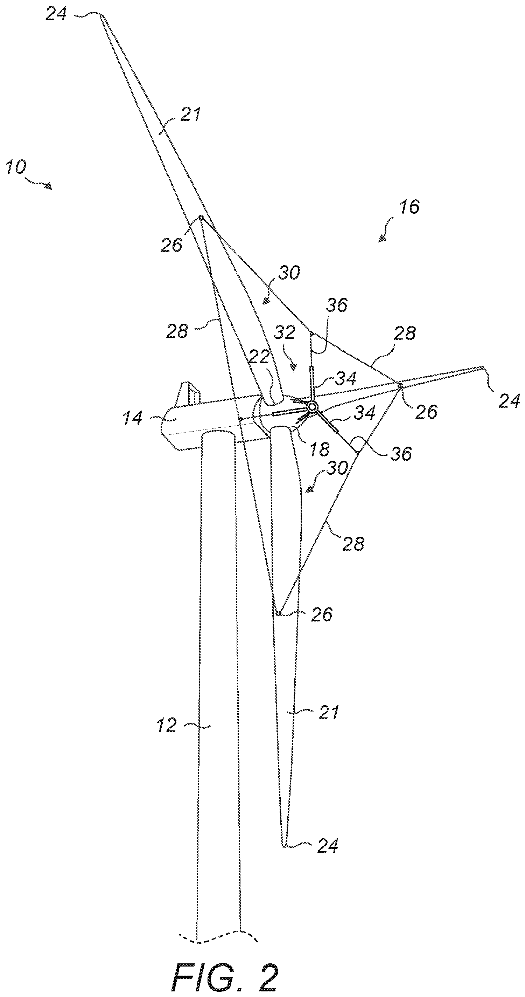

Figure 2 shows a horizontal-axis wind turbine 10 after replacement of the used blades 20 (see Figure 1) with repower blades 21 and adding the further required components. Particularly, the wind turbine 10 of Figure 2 comprises a tower 12 and a nacelle 14 mounted rotatably on the tower 12. A rotor 16 with a hub 18 and repower blades 21 connected pitchable to the hub 18. Each blade has a root 22 connected to the hub 18 and a tip 24 extending away from the hub 18. Furthermore, each blade 21 has a connection point 26 for receiving a blade connecting member 28. Preferably (as shown), the connecting point 26 may receive two blade connecting members 28 - one for each neighbouring blade 21, but in some cases (not shown) the blade 21 comprises two connecting points 26 arranged with same or similar distance from the blade root 22 and each the connecting point may receive one blade connecting member 28 from one of the neighbouring blades 21.

The wind turbine also comprises a tensioning system 32 arrange with the hub 18, e.g. integrated with the hub 18 or arranged as an extension to the hub 18. The tensioning system 32 is adapted to adjust the tension in the blade connecting members 28 for example by pulling a part of the connection member toward the hub by linear actuators 34 optionally via a tension member 36.

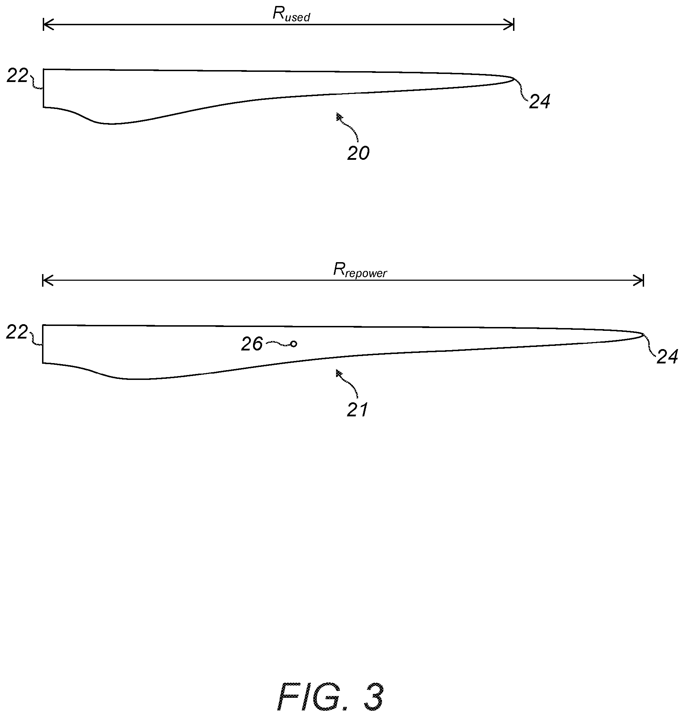

In Figure 3, a comparison between the used blade 20 and the repower blade 21 is shown. The main differences being the length, where the length of the repower blade $R_{repower}$ is much longer that the length of the used blade $R_{used}$. Furthermore, the repower blade 21 comprises a connecting point 26 for receiving a blade connecting member 28.

Due to the advantages of the reinforcement of the repower blade 21 by the blade connecting members 28 during use both with respect to flapwise loads and edgewise loads the repower blade 21 has reduced strength requirement and hence may be more slim, more light weight and/or have a better aerodynamic profile particularly for section of the blade between the blade root and the connection point 26.

The repower blade 21 may be a split blade. Particularly, the repower blade may comprise a root part and a tip part connected with a blade connection element, which preferably comprises the connection point.

**Claims**

1.  A method of repowering a horizontal-axis wind turbine (10) comprising a tower (12), a nacelle (14) located rotatably at the apex of the tower (12), and a rotor (16) having a hub (18) and at least three used blades (20) mounted pitchably to the hub (18) and extending radially therefrom, the method comprising the steps of

    - uninstall the at least three used blades (20) from the hub (18),
    - install at least three repower blades (21) to the hub (18), each repower blade (21) extending between a root (22) and a tip (24), and each repower blade (21) further comprising a connection point (26) located between the root (22) and the tip (24),
    - install a plurality of blade connecting members (28), each blade connecting member (28) being connected between corresponding connection points (26) of a pair of repower blades (21); and
    - install a tensioning system (32) with the hub (18), the tensioning system (32) being configured to adjust a tension in each blade connecting member (28).

2.  The method according to claim 1, wherein the used blades (20) are conventional wind turbine blades supported only at the blade root (22) during operation of the wind turbine (10).

3.  The method according to claim 1 or 2, wherein the tensioning system (32) comprising a plurality of linear actuators (34), each linear actuator (34) being coupled between the hub (18) and a blade connecting member (28), optionally via a tension member (36).

4. The method according to any one of the preceding claims, wherein the repower blade (21) is installed to hub (18) via a coning adjustment member arranged between the blade root (22) and the hub (18).

5. The method according to claim 3 or claim 4 in combination with claim 3, wherein the tensioning system (32) is an independent unit attached near the front of the hub, the tensioning system (32) comprising a separate system for powering the linear actuators (34).

6. The method according to claim 3 or claim 4 in combination with claim 3, wherein the tensioning system (32) comprises a system for powering the linear actuators (34) which is integrated with a blade pitch system of the hub (18) by a shared system for powering the linear actuators (34).

7. The method according to any of the preceding claims further comprising the steps of

- deinstall the hub (18) from nacelle (14),
- install the tensioning system (32) with the hub (18) away from the nacelle (14), and
- install the hub (18) with tensioning system (32) to the nacelle (14).

8. The method according to any one of the preceding claims further comprising the step of replacing a component of the wind turbine selected from a group of main bearing, a gearbox, a generator, a blade bearing, a pitch system component, a yaw system component, a main shaft, and a base frame.

9. The method according to any one of the preceding claims wherein the repower blades (21) are at least 15% longer than the used blades (20), preferably the repower blades (21) are at least 20% longer than the used blade (20).

10. A method of operating a wind turbine (11) repowered according to any one of the claims 1 to 9, wherein the maximum tip speed during operation of the wind turbine generator (10) with used blades (20) is the same as the maximum tip speed during operation of the wind turbine generator (11) with the repower blades (21).

11. A method of operating a wind turbine (11) repowered according to any one of the claims 1 to 9, wherein the maximum hub angular rotation speed during operation of the wind turbine generator (10) with used blades (20) is the same as the maximum hub angular rotation speed during operation of the wind turbine generator (11) with the repower blades (21).

12. The method according to claim 3 or any one of the claims 4 to 9 in combination with claim 3 further comprising the step of installing an updated control software adapted to control the linear actuators (34).

13. The method according to claim 12 wherein the updated control software is further adapted to implement the method of claim 10 or claim 11.


**Patentansprüche**

1. Verfahren zum Repowern einer Horizontalachsen-Windkraftanlage (10), die einen Turm (12), eine Gondel (14), die sich drehbar an der Spitze des Turms (12) befindet, und einen Rotor (16) umfasst, der eine Nabe (18) und mindestens drei gebrauchte Rotorblätter (20), die anstellbar an der Nabe (18) angebracht sind und sich radial von dieser erstrecken, aufweist, wobei das Verfahren die Schritte umfasst zum

- Deinstallieren der mindestens drei gebrauchten Blätter (20) von der Nabe (18),
- Installieren von mindestens drei Repower-Blättern (21) an der Nabe (18), wobei sich jedes Repower-Blatt (21) zwischen einer Wurzel (22) und einer Spitze (24) erstreckt und jedes Repower-Blatt (21) weiter einen Verbindungspunkt (26) umfasst, der sich zwischen der Wurzel (22) und der Spitze (24) befindet,
- Installieren einer Vielzahl von Blattverbindungselementen (28), wobei jedes Blattverbindungselement (28) zwischen entsprechenden Verbindungspunkten (26) eines Paars von Repower-Blättern (21) verbunden ist; und
- Installieren eines Spannsystems (32) mit der Nabe (18), wobei das Spannsystem (32) dazu konfiguriert ist, eine Spannung in jedem Blattverbindungselement (28) einzustellen.

**2.** Verfahren nach Anspruch 1, wobei die gebrauchten Blätter (20) herkömmliche Windkraftanlagenblätter sind, die während eines Betriebs der Windkraftanlage (10) nur an der Blattwurzel (22) gestützt werden.

**3.** Verfahren nach Anspruch 1 oder 2, wobei das Spannsystem (32) eine Vielzahl von Linearstellgliedern (34) umfasst, wobei jedes Linearstellglied (34), optional über ein Spannelement (36), zwischen der Nabe (18) und einem Blattverbindungselement (28) gekoppelt ist.

**4.** Verfahren nach einem der vorstehenden Ansprüche, wobei das Repower-Blatt (21) über ein zwischen der Blattwurzel (22) und der Nabe (18) angeordnetes Konus-Einstellelement an der Nabe (18) installiert wird.

**5.** Verfahren nach Anspruch 3 oder Anspruch 4 in Kombination mit Anspruch 3, wobei das Spannsystem (32) eine unabhängige Einheit ist, die nahe der Vorderseite der Nabe angebracht ist, wobei das Spannsystem (32) ein separates System zum Antreiben der Linearstellglieder (34) umfasst.

**6.** Verfahren nach Anspruch 3 oder Anspruch 4 in Kombination mit Anspruch 3, wobei das Spannsystem (32) ein System zum Antreiben der Linearstellglieder (34) umfasst, das durch ein gemeinsames System zum Antreiben der Linearstellglieder (34) in einem Blattwinkelverstellsystem der Nabe (18) integriert ist.

**7.** Verfahren nach einem der vorstehenden Ansprüche, weiter umfassend die Schritte zum

    - Deinstallieren der Nabe (18) von Gondel (14),
    - Installieren des Spannsystems (32) mit der Nabe (18) fernab der Gondel (14) und
    - Installieren der Nabe (18) mit Spannsystem (32) an der Gondel (14).

**8.** Verfahren nach einem der vorstehenden Ansprüche, weiter umfassend den Schritt zum Ersetzen einer Komponente der Windkraftanlage, ausgewählt aus einer Gruppe aus Hauptlager, einem Getriebe, einem Generator, einem Blattlager, einer Blattwinkelverstelleinrichtungskomponente, einer Giersystemkomponente, einer Hauptantriebswelle und einem Grundrahmen.

**9.** Verfahren nach einem der vorstehenden Ansprüche, wobei die Repower-Blätter (21) mindestens 15 % länger als die gebrauchten Rotorblätter (20) sind, wobei die Repower-Rotorblätter (21) vorzugsweise mindestens 20 % länger als die gebrauchten Rotorblätter (20) sind.

**10.** Verfahren zum Betreiben einer nach einem der Ansprüche 1 bis 9 repowerten Windkraftanlage (11), wobei die maximale Spitzengeschwindigkeit während eines Betriebs der Windkraftanlage (10) mit gebrauchten Rotorblättern (20) dieselbe wie die maximale Spitzengeschwindigkeit während eines Betriebs der Windkraftanlage (11) mit den Repower-Blättern (21) ist.

**11.** Verfahren zum Betreiben einer nach einem der Ansprüche 1 bis 9 repowerten Windkraftanlage (11), wobei die maximale Nabenwinkelrotationsgeschwindigkeit während eines Betriebs der Windkraftanlage (10) mit gebrauchten Rotorblättern (20) dieselbe wie die maximale Nabenwinkelrotationsgeschwindigkeit während eines Betriebs der Windkraftanlage (11) mit den Repower-Blättern (21) ist.

**12.** Verfahren nach Anspruch 3 oder einem der Ansprüche 4 bis 9 in Kombination mit Anspruch 3, weiter umfassend den Schritt zum Installieren einer aktualisierten Steuersoftware, die zum Steuern der Linearstellglieder (34) geeignet ist.

**13.** Verfahren nach Anspruch 12, wobei die aktualisierte Steuersoftware weiter dazu geeignet ist, das Verfahren nach Anspruch 10 oder Anspruch 11 zu implementieren.

**Revendications**

**1.** Procédé de ré-équipement d'une éolienne à axe horizontal (10) comprenant une tour (12), une nacelle (14) située de manière rotative au sommet de la tour (12), et un rotor (16) présentant un moyeu (18) et au moins trois pales usagées (20) montées de manière inclinable sur le moyeu (18) et s'étendant radialement à partir de celui-ci, le procédé comprenant les étapes de

    - désinstallation des au moins trois pales usagées (20) du moyeu (18),

- installation d'au moins trois pales de ré-équipement (21) sur le moyeu (18), chaque pale de ré-équipement (21) s'étendant entre un pied (22) et une pointe (24), et chaque pale de ré-équipement (21) comprenant en outre un point de raccordement (26) situé entre le pied (22) et la pointe (24),
- installation d'une pluralité d'éléments de raccordement de pale (28), chaque élément de raccordement de pale (28) étant raccordé entre des points de raccordement correspondants (26) d'une paire de pales de ré-équipement (21) ; et
- installation d'un système de tension (32) avec le moyeu (18), le système de tension (32) étant configuré pour ajuster une tension dans chaque élément de raccordement de pale (28).

2. Procédé selon la revendication 1, dans lequel les pales usagées (20) sont des pales d'éolienne conventionnelles supportées uniquement au niveau du pied de pale (22) pendant le fonctionnement de l'éolienne (10).

3. Procédé selon la revendication 1 ou 2, dans lequel le système de tension (32) comprend une pluralité d'actionneurs linéaires (34), chaque actionneur linéaire (34) étant couplé entre le moyeu (18) et un élément de raccordement de pale (28), facultativement par le biais d'un élément de tension (36).

4. Procédé selon l'une quelconque des revendications précédentes, dans lequel la pale de ré-équipement (21) est installée sur le moyeu (18) par le biais d'un élément de réglage de cône disposé entre le pied de pale (22) et le moyeu (18).

5. Procédé selon la revendication 3 ou la revendication 4 en combinaison avec la revendication 3, dans lequel le système de tension (32) est une unité indépendante fixée près de l'avant du moyeu, le système de tension (32) comprenant un système séparé pour alimenter les actionneurs linéaires (34).

6. Procédé selon la revendication 3 ou la revendication 4 en combinaison avec la revendication 3, dans lequel le système de tension (32) comprend un système d'alimentation des actionneurs linéaires (34) qui est intégré à un système de calage des pales du moyeu (18) par un système partagé pour alimenter les actionneurs linéaires (34).

7. Procédé selon l'une quelconque des revendications précédentes, comprenant en outre les étapes de

- désinstallation du moyeu (18) de la nacelle (14),
- installation du système de tension (32) avec le moyeu (18) à distance de la nacelle (14), et
- installation du moyeu (18) avec le système de tension (32) sur la nacelle (14).

8. Procédé selon l'une quelconque des revendications précédentes, comprenant en outre l'étape de remplacement d'un composant de l'éolienne sélectionné parmi un groupe comprenant un palier principal, une boîte d'engrenages, un générateur, un palier de pale, un composant de système de calage, un composant de système de lacet, un arbre principal et un châssis de base.

9. Procédé selon l'une quelconque des revendications précédentes, dans lequel les pales de ré-équipement (21) sont au moins 15 % plus longues que les pales usagées (20), de préférence les pales de ré-équipement (21) sont au moins 20 % plus longues que la pale usagée (20).

10. Procédé de fonctionnement d'une éolienne (11) ré-équipée selon l'une quelconque des revendications 1 à 9, dans lequel la vitesse de pointe maximale pendant le fonctionnement de l'éolienne (10) avec des pales usagées (20) est la même que la vitesse de pointe maximale pendant le fonctionnement de l'éolienne (11) avec les pales de ré-équipement (21).

11. Procédé de fonctionnement d'une éolienne (11) ré-équipée selon l'une quelconque des revendications 1 à 9, dans lequel la vitesse de rotation angulaire maximale du moyeu pendant le fonctionnement de l'éolienne (10) avec des pales usagées (20) est la même que la vitesse de rotation angulaire maximale du moyeu pendant le fonctionnement de l'éolienne (11) avec les pales de ré-équipement (21).

12. Procédé selon la revendication 3 ou l'une quelconque des revendications 4 à 9 en combinaison avec la revendication 3 comprenant en outre l'étape d'installation d'un logiciel de commande mis à jour, adapté pour commander les actionneurs linéaires (34).

13. Procédé selon la revendication 12, dans lequel le logiciel de commande mis à jour est en outre adapté pour mettre en œuvre le procédé selon la revendication 10 ou la revendication 11.

*FIG. 1*

FIG. 2

*FIG. 3*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3580453 A1
- US 2012051912 A1